# EUROPÄISCHE PATENTSCHRIFT

(11) **EP 4 056 504 B1**
(45) Veröffentlichungstag und Bekanntmachung des Hinweises auf die Patenterteilung: **09.04.2025**
(21) Anmeldenummer: 22158165.5
(22) Anmeldetag: 23.02.2022
(51) Int. Cl.: B65G 21/20, B23Q 3/00, B27B 5/02, B27B 5/04, B65G 15/14, B27B 31/00, B27C 5/06, B27M 1/08

(54) **TRANSPORTVORRICHTUNG FÜR PLATTENFÖRMIGE WERKSTÜCKE**
TRANSPORT DEVICE FOR PLATE-SHAPED WORKPIECES
DISPOSITIF DE TRANSPORT POUR PIÈCES TABULAIRES

(30) Priorität: 10.03.2021 DE 102021105832
(43) Veröffentlichungstag der Anmeldung: 14.09.2022
(73) Patentinhaber: IMA Schelling Deutschland GmbH, 32312 Lübbecke (DE)
(72) Erfinder: Hopmann, Chris, 32609 Hüllhorst (DE); Ptack-Panske, Michael, 31675 Bückeburg (DE)
(74) Vertreter: Schober, Mirko

(56) Entgegenhaltungen:
- WO-A1-2013/063701
- GB-A- 986 651
- JP-A- H07 156 104
- JP-A- S58 104 702
- JP-U- S5 732 101
- JP-U- S57 103 808
- JP-U- S6 325 504
- US-A- 4 881 584

## Beschreibung

Die Erfindung betrifft eine Transportvorrichtung für plattenförmige Werkstücke nach dem Oberbegriff des Anspruchs 1.

Entsprechende Transportvorrichtungen, wie sie z. B. aus US 4,881,584 A, GB 986651 A, JP H07 156104 A, JP S58 104702 bekannt sind, werden im Bereich der Holzverarbeitung eingesetzt, um plattenförmige Werkstücke aus Holz oder Holzersatzstoffen in eine Holzverarbeitungsmaschine einzuziehen oder durch dieselbe zu transportieren. Nicht selten wird dabei eine Transportauflage in Gestalt einer Transportkette oder dergleichen verwendet. Auf dieser Transportkette wird das Werkstück durch die Holzverarbeitungsmaschine bzw. die Transportvorrichtung geführt. Damit das Werkstück nicht verrutscht, wird in der Regel eine Oberdruckeinrichtung eingesetzt, welche eine vorgegebene Druckkraft auf das auf der Transportauflage liegende Werkstück ausübt. Auch werden dazu manchmal Oberdruckriemen eingesetzt, wie beispielsweise aus JP S57 103808 U bekannt, welche an der Oberdruckeinrichtung umlaufend geführt sind. Nun ist es so, dass von Werkstück zu Werkstück die Werkstückdicke sich verändert oder die nötige Druckkraft, die von der Oberdruckeinrichtung auf das Werkstück ausgeübt wird, verändert werden oder angepasst werden muss. Bislang wurden hierzu Kipphebel verwendet, welche Rollen aufweisen, über die der Oberdruckriemen geführt wird. Diese Kipphebel sind in der Lage, einen bestimmten Hub auszuüben, indem ein Hebel um eine Schwenkachse geschwenkt wird. Üblicherweise wird als Gegenlager für den Hebel eine Druckfeder eingesetzt, um die Schwenkbewegung wieder rückgängig zu machen, sollte der Hub verändert werden.

Diese Kipphebel weisen allerdings den Nachteil auf, dass mit ihnen lediglich ein verhältnismäßig geringer Hub von 1 bis 3 mm möglich und zulässig ist. Dies schafft aber Probleme, wenn unterschiedliche Plattendicken als Werkstücke in einer Maschine verarbeitet werden sollen, deren Dicke in der Regel zwischen 12 bis 25 mm variiert. Eine Transportvorrichtung, die die Merkmale des Oberbegriffs des Anspruchs 1 offenbart, ist aus WO 2013/063701 A1 bekannt.

Aufgabe der vorliegenden Erfindung ist es daher, eine Transportvorrichtung der eingangs genannten Art anzugeben, welche sich auch für die dickeren Werkstücke eignet, ohne dass dabei die Druckkraft der Oberdruckeinrichtung auf die Platte abhängig von der Dicke des Werkstücks zu stark beeinträchtigt wird.

Gelöst wird diese Aufgabe durch eine Transportvorrichtung mit den Merkmalen des Anspruchs 1. Vorteilhafte Ausführungsformen finden sich in den Unteransprüchen.

Die erfindungsgemäße Transportvorrichtung dient zum Transport von plattenförmigen Werkstücken, insbesondere aus Holz- oder Holzersatzstoffen. Sie weist eine Transportauflage auf, die ein darauf aufliegendes Werkstück in einer Transportrichtung transportiert. Ferner verfügt die Transportvorrichtung über eine Oberdruckeinrichtung, die dazu ausgelegt ist, eine Druckkraft auf das Werkstück in Richtung der Transportauflage auszuüben. Die Transportauflage ist erfindungsgemäß als Kettenbahn mit einzelnen Kettenelementen ausgebildet.

Die Oberdruckeinrichtung weist hierzu eine Kipphebeleinrichtung oder eine Mehrzahl Kipphebeleinrichtungen auf. Wenigstens eine Kipphebeleinrichtung umfasst dabei wenigstens eine Andruckrolle. Die wenigstens eine Kipphebeleinrichtung ist dabei so ansteuerbar, dass die wenigstens eine Andruckrolle eine vorgegebene Druckkraft auf das auf der Transportauflage liegende Werkstück ausübt.

Die wenigstens eine Kipphebeleinrichtung umfasst weiter einen Kipphebel, an dessen einem Ende die wenigstens eine Andruckrolle drehbar gelagert ist. Der Kipphebel ist seinerseits über ein erstes Gelenk indirekt mit einem ortsunveränderlichen Abschnitt der Oberdruckeinrichtung gelenkig gekoppelt. Erfindungsgemäß ist dabei vorgesehen, dass der Kipphebel über ein zweites Gelenk mit einer Feder- oder Stelleinrichtung gelenkig gekoppelt ist.

Der Kipphebel ist somit nicht nur gegenüber einem ortsunveränderlichen Abschnitt schwenkbar und so in seinem Hub begrenzt, sondern es kann die Kippachse selbst verschoben werden, d. h. einen Hub ausführen. Auf diese Weise ist es gegenüber konventionellen Transportvorrichtungen möglich, einen wesentlich größeren Hub des Kipphebels zu ermöglichen. Dies wird mittels des zweiten Gelenks ermöglicht, welches neben dem über die Feder- oder Stelleinrichtung vermittelten vertikalen Hubs für eine Schwenkbewegung sorgt. Dieser erweiterte Hub ermöglicht es, insbesondere auch Höhendifferenzen von mehr als 3 mm auszugleichen. Insbesondere sind damit auch Werkstücke mit großer Dickendifferenz von beispielsweise 12 bis 25 mm Werkstückdicke mit der erfindungsgemäßen Transporteinrichtung transportabel. Natürlich lässt sich der jeweils erforderliche Hub mittels einer entsprechenden Steuereinrichtung einstellen oder gegebenenfalls regeln.

Insbesondere kann die erfindungsgemäße Transportvorrichtung eine Mehrzahl nicht untereinander mechanisch gekoppelte Kipphebeleinrichtungen aufweisen. Auf diese Weise können die Kipphebeleinrichtungen auch individuell verstellt bzw. ihre Druckkraft auf das Werkstück individuell gesteuert werden, was bei den oben angesprochenen Höhendifferenzen von besonderem Vorteil ist. Beispielsweise kann jede Kipphebeleinrichtung eine eigene Feder- oder Stelleinrichtung aufweisen, die eine entsprechende individuelle Einstellung ermöglicht. Besonders bevorzugt ist, wenn jede Feder- oder Stelleinrichtung einen Hub in einer Vertikalrichtung senkrecht zur Transportrichtung ausführen kann. Dadurch gelingt es, gegenüber anderen Systemen, den für den Schwenkbereich der Kipphebel erforderlichen Bauraum auf ein Minimum zu beschränken. Das ermöglicht, dass benachbarte Kipphebeleinrichtungen noch dichter nebeneinander angeordnet werden können, so dass in Transportrichtung eine noch feinere Druckanpassung möglich ist.

Erfindungsgemäß weist die Oberdruckeinrichtung einen Oberdruckriemen auf, der zwischen der wenigstens einen Andruckrolle und der Transportauflage geführt ist. Dieser Riemen ermöglicht es u. a., dass gerade bei einer Mehrzahl verwendeter Andruckrollen bzw. einer Mehrzahl verwendeter Kipphebel eine mehr oder weniger gleichmäßige Druckkraft auf das Werkstück ausgeübt wird. Bevorzugt handelt es sich bei dem Riemen um einen Keilriemen. Einige der Andruckrollen können entsprechende Führungen aufweisen.

Dabei kann insbesondere vorgesehen sein, dass der Oberdruckriemen in der Oberdruckeinrichtung im Umlauf geführt ist und über die wenigstens eine Kipphebeleinrichtung gegen das auf der Transportauflage liegende Werkstück mit einer, insbesondere durch eine Steuerung der Transportvorrichtung vorgebbaren oder regelbaren, Druckkraft angedrückt werden kann. Dieser Oberdruckriemen lässt sich in seiner Umlaufgeschwindigkeit mit der Vorschubgeschwindigkeit der Transportauflage synchronisieren, sodass es zu keinen unbeabsichtigten Verschiebungen des Werkstücks kommt.

Der Kipphebel ist erfindungsgemäß über einen Lenker mit dem ortsunveränderlichen Abschnitt gelenkig gekoppelt. Auf diese Weise entsteht ein Dreigelenk, welches einen noch größeren Schwenkbereich des Kipphebels ermöglicht. Bevorzugt kann vorgesehen sein, dass die Feder- oder Stelleinrichtung eine Druckfeder, einen pneumatischen oder hydraulisch betriebenen Druckzylinder, oder einen Linearantrieb, insbesondere eine Motorspindel, einen Magnetantrieb, einen Linearantrieb oder einen Linearmotor umfasst. Andere Verstellmöglichkeiten, die einen Hub des Kipphebels ermöglichen oder unterstützen, sind natürlich auch denkbar.

Die Erfindung betrifft ferner eine nicht beanspruchte maschine, welche die oben beschriebene Transportvorrichtung umfasst. Ferner umfasst die Erfindung auch die nicht beanspruchte Verwendung einer oben beschriebenen Transportvorrichtung zum Transportieren von plattenförmigen Erzeugnissen aus Holz oder Holzersatzstoffen. Die Verwendung umfasst bevorzugt nicht den Transport von Werkstücken, die aus kollabierbarem Material bestehen.

Die Erfindung wird nachfolgend anhand der Figuren 1 bis 3 näher erläutert.
Figur 1 zeigt eine schematische Schnittansicht einer erfindungsgemäßen Transportvorrichtung.
Figur 2 zeigt ein Beispiel für eine erfindungsgemäße Kipphebeleinrichtung in seitlicher Ansicht.
Figur 3 zeigt die in Figur 2 dargestellte Kipphebeleinrichtung in einer ersten Hubstellung (links) und einer zweiten Hubstellung (rechts) in Seitenansicht, wobei ein Teil der Kipphebeleinrichtungen weggeschnitten ist.

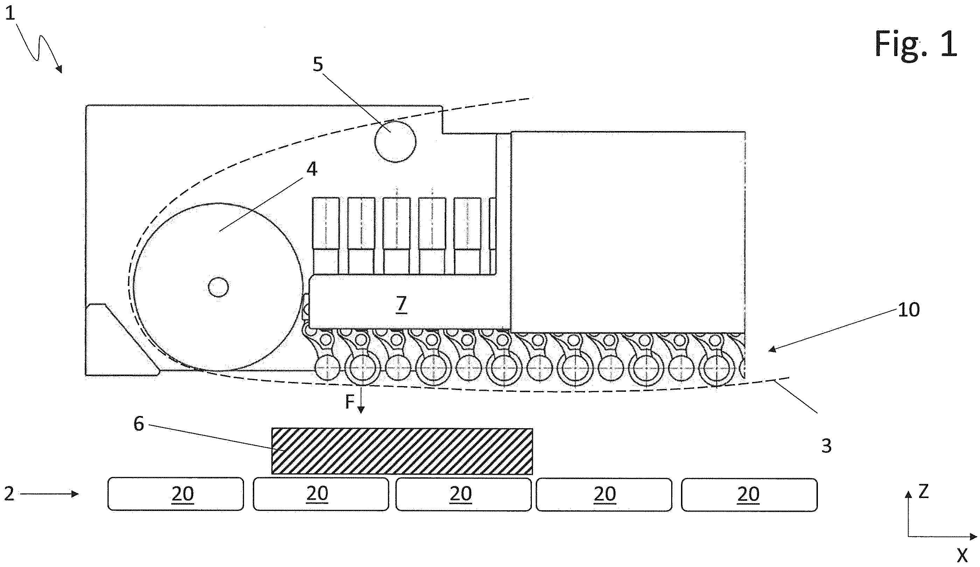

Die in Figur 1 dargestellte Transportvorrichtung weist eine Oberdruckeinrichtung 1 und eine in Vertikalrichtung Z betrachtet unterhalb der Oberdruckeinrichtung 1 angeordnete Transportauflage 2 auf, welche als Kettenbahn mit einer Mehrzahl Kettensegmente 20 ausgebildet ist. Auf dieser Transportauflage 2 aufliegend wird das plattenförmige Werkstück 6 in Transportrichtung X, bevorzugt senkrecht zur Vertikalrichtung Z transportiert.

Die Oberdruckeinrichtung 1 weist bevorzugt eine Mehrzahl in Transportrichtung X nebeneinander angeordnete Kipphebeleinrichtungen 10 auf, die bevorzugt an einem ortsfesten Abschnitt 7 der Oberdruckeinrichtung 1 befestigt sind. Grundsätzlich funktioniert die Erfindung mit einer einzigen Kipphebeleinrichtung 10. Jede Kipphebeleinrichtung 10 ist bevorzugt von der Maschinensteuerung individuell anzusteuern, so dass die Kipphebel sich auch individuell verstellen lassen. Jede Kipphebelvorrichtung 10 weist zumindest eine Andruckrolle auf, die gegen einen Oberdruckriemen 3 anliegt, welcher an den Andruckrollen vorbei über eine um Lenkrolle 4 und gegebenenfalls weitere Führungsrollen 5 an der Oberdruckeinrichtung 1 umlaufend geführt und bevorzugt mit der Transportauflage 2 synchronisiert ist. Dadurch, dass die Kipphebeleinrichtungen 10 erfindungsgemäß in der Lage sind, einen Hub mit zumindest einer Komponente in Vertikalrichtung Z auszuüben, sind sie auch in der Lage, auf den Oberdruckriemen 3, der am Werkstück 6 anliegt, und damit auch auf das Werkstück eine vorgegebene Druckkraft F zu übertragen. Auf diese Weise wird das Werkstück 6 mit einer definierten Klemmkraft zwischen der Transportauflage 2 und der Oberdruckeinrichtung 1 gehalten.

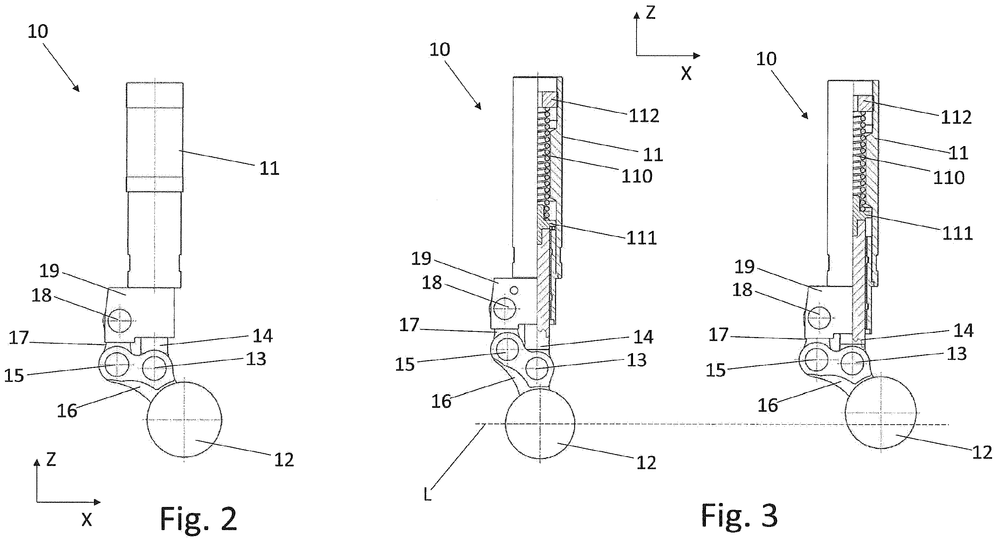

Eine erfindungsgemäße Kipphebeleinrichtung 10 ist in Seitenansicht in Figur 2 dargestellt. Im gezeigten Beispiel ist eine Feder- oder Stelleinrichtung 11 beispielhaft als Hubzylinder ausgebildet, der in der Lage ist, infolge einer Ansteuerung durch eine nicht dargestellte Maschinensteuerung eine Hubstange 14 in Vertikalrichtung Z zu bewegen. Am Ende der Hubstange 14 ist der Kipphebel 16 mit einem ersten Gelenk 13 angelenkt. Am Ende des Kipphebels 16 befindet sich eine Andruckrolle 12, die zur Anlage gegen den Oberdruckriemen oder auch gegen das Werkstück selbst ausgebildet ist. Der Kipphebel 16, der in Gestalt eines Kniehebels ausgebildet sein kann, weist ein weiteres Gelenk 15 auf, mit welchem der Kipphebel 16 an einem gegenüber der Oberdruckeinrichtung ortsfesten oder ortsunveränderlichen Abschnitt 19 gekoppelt ist. So ist der Kipphebel 16 mit mindestens einem Lenker 17 gekoppelt, der seinerseits an einem weiteren Gelenk 18 am Abschnitt 19 angelenkt ist. Eine Verstellung des Hubes der Hubstange 14 bewirkt, dass der Kipphebel 16 um das Gelenk 13 verschwenkt wird. Die Andruckrolle 12 führt also eine kombinierte Hub- und Schwenkbewegung aus. Der zusätzliche optionale Lenker 17 (es können auch noch mehr als ein Lenker 17 vorgesehen sein) sorgt dafür, dass das Gelenk 15 des Kipphebels 16 selbst beweglicher bleibt, sodass der insgesamt erzielbare Hub der Kipphebeleinrichtung vergrößert wird.

In Figur 3 ist auf der linken Seite eine erste Hubstellung mit ausgefahrener Hubstange 14 zu erkennen und auf der rechten Seite eine Hubstellung mit maximal eingefahrener Hubstange 14. Zum Vergleich sind die Mittelpunkte der Andruckrollen markiert und eine Referenzlinie L eingezeichnet, aus der erkennbar ist, wie der Mittelpunkt der Andruckrolle auf der rechten Seite gegenüber dem Mittelpunkt der Andruckrolle auf der linken Seite in Richtung Z angehoben wird.

Wie man auf der linken Seite von Figur 3 erkennt, ist der Kipphebel 16 bei maximal ausgefahrener Hubstange 14, die über ein Verbindungselement 111 mit einer Druckfeder 110 verbunden ist, die sich im oberen Bereich des Zylinders 11 gegen einen Anschlag 112 abstützt, in einer gewinkelten Stellung zur Referenzlinie L bzw. der Transportrichtung X angeordnet. Wird die Hubstange 14 in Vertikalrichtung Z, also bevorzugt gegen den Druck der Druckfeder 110, bewegt, so nimmt sie den Kipphebel 16 über das Gelenk 13 mit und hebt die Andruckrolle 12 dabei in Vertikalrichtung an. Dabei wird der Kipphebel 16 aus der in der linken Darstellung von Figur 3 gezeigten Stellung verschwenkt und nimmt, wie man der rechten Darstellung von Figur 3 entnimmt, zur Transportrichtung X demgegenüber einen kleineren Anstellwinkel ein. Dabei wird über das Gelenk 15, welches mit dem Abschnitt 19 gegebenenfalls noch über den Lenker 17 zwangsgekoppelt ist, in die zur aufwärtsgerichteten Hubrichtung entgegengesetzte Abwärtsrichtung gedrückt. Auf diese Weise wird also der Kipphebel 16 verschwenkt. Beide geschilderten Bewegungen, die Kippbewegung einerseits und die Hubbewegung andererseits, sorgen dafür, dass die Andruckrolle 12 von der rechts abgebildeten Stellung zur links abgebildeten Stellung angehoben wird.

Gegenüber bisherigen Kipphebeln ist es somit möglich, den maximalen Hub zu vergrößern, da eine Schwenkbewegung mit einer zusätzlichen Hubbewegung kombiniert wird. Auf diese Weise wird die erfindungsgemäße Transportvorrichtung noch flexibler und über eine entsprechende Steuerung können Druckkräfte von der Oberdruckeinrichtung 1 auf das Werkstück 6 über einen noch größeren Hubbereich eingestellt und - wie sich herausgestellt hat - auch im Wesentlichen konstant gehalten werden.

## Patentansprüche

1. Transportvorrichtung für plattenförmige Werkstücke (6), insbesondere aus Holz- oder Holzersatzstoffen, aufweisend eine Transportauflage (2), die das darauf aufliegende Werkstück (6) in einer Transportrichtung (X) transportiert und eine Oberdruckeinrichtung (1), die dazu ausgelegt ist, eine Druckkraft (F) auf das Werkstück (6) in Richtung der Transportauflage (2) auszuüben, wobei die Oberdruckeinrichtung (1) eine Kipphebeleinrichtung (10) oder eine Mehrzahl Kipphebeleinrichtungen (10) aufweist, wobei wenigstens eine Kipphebeleinrichtung (10) wenigstens eine Andruckrolle (12) umfasst, wobei die Kipphebeleinrichtung (10) so ansteuerbar ist, dass die wenigstens eine Andruckrolle (12) eine vorgegebene Druckkraft (F) auf das auf der Transportauflage (2) liegende Werkstück (6) ausübt, wobei die Kipphebeleinrichtung (10) einen Kipphebel (16) umfasst, an dessen einem Ende die Andruckrolle (12) drehbar gelagert ist, wobei der Kipphebel (16) über ein erstes Gelenk (15) mit einem ortsunveränderlichen Abschnitt (19) der Oberdruckeinrichtung (1) gelenkig gekoppelt ist,
wobei der Kipphebel (16) über ein zweites Gelenk (13) mit einer Feder- oder Stelleinrichtung (11) gelenkig gekoppelt ist,
wobei der Kipphebel (16) indirekt, nämlich über einen Lenker (17) mit dem ortsunveränderlichen Abschnitt (19) gelenkig gekoppelt ist, wobei der Lenker (17) an dem Kipphebel (16) einerseits und an dem ortsunveränderlichen Abschnitt (19) andererseits angelenkt ist, wobei die Oberdruckeinrichtung (1) einen Oberdruckriemen (3) aufweist, der zwischen der wenigstens einen Andruckrolle (12) und der Transportauflage (2) geführt ist, **dadurch gekennzeichnet, dass**
die Transportauflage (2) als Kettenbahn mit einzelnen Kettenelementen (20) ausgebildet ist.

2. Transportvorrichtung nach Anspruch 1,
**dadurch gekennzeichnet,**
**dass** sie eine Mehrzahl nicht untereinander mechanisch gekoppelte Kipphebeleinrichtungen (10) aufweist.

3. Transportvorrichtung nach Anspruch 1 oder 2,
**dadurch gekennzeichnet,**
**dass** jede Kipphebeleinrichtung (10) eine eigene Feder- oder Stelleinrichtung (11) aufweist.

4. Transportvorrichtung nach einem der vorigen Ansprüche,
**dadurch gekennzeichnet,**
**dass** jede Feder- oder Stelleinrichtung (11) einen Hub in einer Vertikalrichtung (Z) senkrecht zur Transportrichtung (X) ausführen kann.

5. Transportvorrichtung nach einem der vorigen Ansprüche,
**dadurch gekennzeichnet,**
**dass** der Oberdruckriemen (3) in der Oberdruckeinrichtung (1) im Umlauf geführt ist und über die wenigstens eine Kipphebeleinrichtung (10) gegen das auf der Transportauflage (2) liegende Werkstück (6) mit einer, insbesondere durch eine Steuerung der Transportvorrichtung vorgebbaren oder regelbaren, Druckkraft (F) angedrückt werden kann.

6. Transportvorrichtung nach einem der vorigen Ansprüche,
**dadurch gekennzeichnet,**
**dass** die einer Feder- oder Stelleinrichtung (11) eine Druckfeder, einen pneumatischen oder hydraulisch betriebenen Druckzylinder, oder einen Linearantrieb, insbesondere eine Motorspindel, einen Magnetantrieb, einen Linearantrieb oder einen Linearmotor umfasst.

## Claims

1. Transport device for plate-type workpieces (6), in particular of wood or wood substitutes, comprising a transport support layer (2), which transports the workpiece (6) placed thereon in a transport direction (X), and an upper press unit (1) which is configured to exert a pressure force (F) on the workpiece (6) in the direction of the transport support layer (2), wherein the upper press unit (1) has a toggle lever mechanism (10) or a plurality of toggle lever mechanisms (10) wherein at least one toggle lever mechanism (10) comprises at least one contact pressure roller (12), wherein the toggle lever mechanism (10) can be controlled such that the at least one contact pressure roller (12) exerts a predetermined pressure force (F) on the workpiece (6) that lies on the transport support layer (2), wherein the toggle lever mechanism (12) comprises a toggle lever (16) at the one end of which the contact pressure roller (12) is mounted in rotatable manner, wherein the toggle lever (16) is coupled in articulated manner by way of a first articulated joint (15) to a position-fixed portion (19) of the upper press unit (1), wherein the toggle lever (16) is coupled for articulated movement by way of a second articulated joint (13) to a spring or positioning device (11), wherein the toggle lever (16) is coupled for articulated movement indirectly, namely via a guide rod (17), to the position-fixed portion(19), wherein the guide rod (17) is attached on one side to the toggle lever (16) and on the other side to the position-fixed portion (19), wherein the upper press unit (1) has an upper pressure belt (3) which is guided between the at least one contact pressure roller (12) and the transport support layer (2), **characterised in that** the transport support layer (2) is configured as a chain web with individual chain elements (20).

2. Transport device according to claim 1
**characterised in that**
it has a plurality of toggle lever mechanisms (10) which are not coupled mechanically to one another.

3. Transport device according to claim 1 or 2
**characterised in that**
each toggle lever mechanism (10) has its own spring or positioning device (11).

4. Transport device according to one of the preceding claims
**characterised in that**
each spring or positioning device (11) can execute a lift in a vertical direction (Z) at right angles to the transport direction (X).

5. Transport device according to one of the preceding claims
**characterised in that**
the upper pressure belt (3) is guided in circulation in the upper press unit (1) and can be pressed via the at least one toggle lever mechanism (10) against the workpiece (6), that is lying on the transport support layer (2), with a pressure force (F) which can be predetermined or regulated by a control system of the transport device.

6. Transport device according to one of the preceding claims
**characterised in that**
the one spring or positioning device (11) comprises a compression spring, a pneumatically or hydraulically operated pressure cylinder, or a linear drive, particularly a motor spindle, magnetic drive, a linear drive, or a linear motor.

## Revendications

1. Dispositif de transport pour des pièces en forme de plaque (6), surtout en bois ou en matériaux de substitution du bois, comportant un support de transport (2) transportant la pièce (6) posée dessus dans une direction de transport (X), et un dispositif de pression supérieure (1), qui est conçue pour exercer une pression (F) sur la pièce (6) dans la direction du support de transport (2), dans lequel le dispositif de pression supérieure (1) comporte un moyen de levier oscillant (10) ou une pluralité de moyens de leviers oscillants (10), dans lequel au moins un moyen de levier oscillant (10) comporte au moins un rouleau de pression (12), dans lequel le moyen de levier oscillant (10) peut être commandé de telle sorte que l'au moins un rouleau de pression (12) exerce une pression (F) prédéfinie sur la pièce (6) posée sur le support de transport (2), dans lequel le moyen de levier oscillant (10) comporte un levier oscillant (16) à l'une des extrémités duquel le rouleau de pression (12) est monté à rotation, dans lequel le levier oscillant (16) est couplé de manière articulée par une première articulation (15) à une section stationnaire (19) du dispositif de pression supérieure (1), dans lequel le levier oscillant (16) est couplé de manière articulée par une deuxième articulation (13) à un moyen de ressort ou de réglage (11), dans lequel le levier oscillant (16) est couplé de manière articulée indirectement, à savoir par une bielle (17), à la section stationnaire (19), dans lequel la bielle (17) est articulée au levier oscillant (16) d'une part et à la section stationnaire (19) d'autre part, dans lequel le dispositif de pression supérieure (1) comporte une courroie de pression supérieure (3), qui est menée entre l'au moins un rouleau de pression (12) et le support de transport (2),
**caractérisé en ce**
**que** le support de transport (2) est conçu en tant que transporteur à chaîne avec des éléments individuels de chaîne (20).

2. Dispositif de transport selon la revendication 1,
**caractérisé en ce**
**qu'**il comporte une pluralité des moyens de levier oscillant (10) qui ne sont pas couplés mécaniquement entre eux.

3. Dispositif de transport selon la revendication 1 ou 2,
**caractérisé en ce**
**que** chaque moyen de levier oscillant (10) comporte un propre moyen de ressort ou de réglage (11).

4. Dispositif de transport selon l'une quelconque des revendications précédentes,
**caractérisé en ce**
**que** chaque moyen de ressort ou de réglage (11) peut effectuer une course dans une direction verticale (Z) perpendiculairement à la direction de transport (X).

5. Dispositif de transport selon l'une quelconque des revendications précédentes,
**caractérisé en ce**
**que** la courroie de pression supérieure (3) est menée en circulation dans le dispositif de pression supérieure (1) et, à travers l'au moins un moyen de levier oscillant (10), peut être pressée avec une pression (F) prédéfinissable et réglable, surtout par une commande du dispositif de transport, contre la pièce (6) posée sur le support de transport (2).

6. Dispositif de transport selon l'une quelconque des revendications précédentes,
**caractérisé en ce**
**que** l'un des moyens de ressort ou de réglage (11) comporte un ressort de pression, un cylindre de pression à commande pneumatique ou hydraulique, ou un entraînement linéaire, surtout une broche à moteur, un entraînement magnétique, un entraînement linéaire ou un moteur linéaire.
